# EUROPEAN PATENT APPLICATION

(11) **EP 4 318 624 A1**
(43) Date of publication of application: **07.02.2024**
(21) Application number: 22779345.2
(22) Date of filing: 07.01.2022
(51) Int. Cl.: H01M 4/02, H01M 4/04, H01M 4/13, H01M 4/139, H01M 4/66, H01M 10/04, H01M 50/533, H01M 50/534, H01M 50/536, H01M 50/538, H01M 50/586, H01M 50/591

(54) **SECONDARY BATTERY ELECTRODE, SECONDARY BATTERY, AND METHOD FOR PRODUCING SECONDARY BATTERY ELECTRODE**

(30) Priority: 31.03.2021 JP 2021059945
(71) Applicant: Panasonic Intellectual Property Management Co., Ltd., Osaka-shi, Osaka 540-6207 (JP)
(72) Inventor: IZUMI, Reiko, Osaka 571-0057 (JP); MAEDA, Satoru, Osaka 571-0057 (JP); GESHI, Shinya, Osaka 571-0057 (JP); KOZUKI, Kiyomi, Osaka 571-0057 (JP)
(74) Representative: Novagraaf International SA
(86) International application number: PCT/JP2022/000339
(87) International publication number: WO 2022/209112

(57) **Abstract**

A positive electrode (11), which is an example of this secondary battery electrode, includes: a positive electrode core material (20); an electrically conductive adhesive layer (22) disposed on the positive electrode core material (20); and a positive electrode mixture layer (24) disposed on the adhesive layer (22). The positive electrode core material (20) includes, at one end in a lateral direction of the positive electrode core material (20), an exposed portion (28) where the adhesive layer (22) and the positive electrode mixture layer (24) are not disposed. An insulating protection layer (26) that includes resin is disposed on the exposed portion (28) of the one end. A predetermined gap is provided between the protective layer (26) and an end surface of one end in the lateral direction of the adhesive layer (22).

## Description

### TECHNICAL FIELD

The present disclosure relates to techniques of an electrode for a secondary battery, a secondary battery, and a method for manufacturing an electrode for a secondary battery.

### BACKGROUND

In a secondary battery having a wound electrode assembly in which a positive electrode and a negative electrode are wound with a separator interposed therebetween, a structure such as a lead-type current collecting structure or a tabless structure is known as a structure of the portion in which a current in the battery is taken out (see, for example, Patent Literature 1 to 9). In the lead-type current collecting structure, for example, a plurality of lead wires led out from an electrode (positive electrode or negative electrode) or a plurality of current collector tabs protruding from the electrode are welded to a collector plate provided in the battery for collecting a current of the electrode. In the tabless structure, for example, the current collector at the end of an electrode in the lateral direction is exposed, and a collector plate provided in the battery and the exposed part of the current collector are welded to each other.

### CITATION LIST

### PATENT LITERATURE

Patent Literature 1: JP 2009-43515 A
Patent Literature 2: JP 2002-352789 A
Patent Literature 3: JP 2006-172780 A
Patent Literature 4: JP 2008-108742 A
Patent Literature 5: JP 2007-227137 A
Patent Literature 6: JP 2006-32112 A
Patent Literature 7: JP 2001-93583 A
Patent Literature 8: JP 2006-260892 A
Patent Literature 9: JP 2010-118315 A

### SUMMARY

### TECHNICAL PROBLEM

In the lead-type current collecting structure and the tabless current collecting structure, metal bonding between the lead wire, the current collector tab, or the exposed part and the collector plate is performed by melt bonding such as resistance welding or laser beam welding. In such melt bonding, when a metal of the lead wire or the current collector (the current collector tab or the exposed part) is melted, an event may occur in which, for example, air contained in the metal of the lead wire or the current collector rapidly expands in volume due to heat of the metal melting, or a low-melting-point foreign substance contained in a metal material of the lead wire or the current collector rapidly vaporizes due to heat of the metal melting and thus the metal material expands in volume. The force due to such volume expansion scatters the molten metal during welding in the form of a fine metal powder to generate so-called "dust". Such dust remaining attached to the electrode may cause an internal short circuit. In the wound electrode assembly, for example, winding deviation of the electrode or the separator may bring a lead wire or a current collector (a current collector tab or an exposed part) of one electrode into contact with the other electrode serving as a counter electrode, and thus an internal short circuit may occur.

Therefore, an object of the present disclosure is to provide an electrode for a secondary battery, a secondary battery, and a method for manufacturing an electrode for a secondary battery, in which occurrence of an internal short circuit can be suppressed.

### SOLUTION TO PROBLEM

An electrode for a secondary battery according to an aspect of the present disclosure includes a core member, an adhesive layer disposed on the core member and being conductive, a mixture layer disposed on the adhesive layer, and a protective layer containing a resin and being insulating, and the core member has an exposed part, at one end of the core member in a lateral direction, in which the adhesive layer and the mixture layer are not disposed, and the protective layer is disposed on the exposed part at the one end and is at a predetermined interval from an end surface at one end of the adhesive layer in a lateral direction.

A secondary battery according to an aspect of the present disclosure includes a wound electrode assembly in which a positive electrode and a negative electrode are wound with a separator interposed between the positive electrode and the negative electrode, and at least one of the positive electrode or the negative electrode is the above-described electrode for a secondary battery.

A method for manufacturing an electrode for a secondary battery according to an aspect of the present disclosure includes, in manufacture of the above-described electrode for a secondary battery, an adhesive layer forming step of forming the adhesive layer by a wet process on the core member excluding the exposed part, a protective layer forming step of forming the protective layer by a wet process on the exposed part, and a mixture layer forming step of producing a mixture sheet by a dry process and attaching the mixture sheet produced to the adhesive layer to form the mixture layer.

### ADVANTAGEOUS EFFECTS OF INVENTION

According to an aspect of the present disclosure, occurrence of an internal short circuit can be suppressed.

### BRIEF DESCRIPTION OF DRAWINGS

FIG. 1 is a schematic sectional view illustrating a main part of a secondary battery according to the present embodiment.
FIG. 2 is a schematic plan view illustrating a positive electrode before winding.
FIG. 3 is a schematic sectional view of the positive electrode taken along the line A-A in FIG. 2.
FIG. 4 is a schematic plan view illustrating a negative electrode before winding.
FIG. 5 is a schematic sectional view of the negative electrode taken along the line A-Ain FIG. 4.
FIG. 6 is a schematic sectional view illustrating a modification of a main part of a secondary battery according to the present embodiment.
FIG. 7 is a schematic plan view illustrating a positive electrode before winding.
FIG. 8 is a schematic sectional view of the positive electrode taken along the line A-A in FIG. 7.
FIG. 9 is a schematic sectional view illustrating a modification of the positive electrode taken along the line A-A in FIG. 7.
FIG. 10 is a schematic sectional view illustrating a modification of the positive electrode taken along the line A-A in FIG. 7.
FIG. 11 is a schematic sectional view illustrating a modification of the positive electrode taken along the line A-A in FIG. 7.
FIG. 12 is a schematic plan view illustrating a modification of a positive electrode.
FIG. 13 is a schematic plan view illustrating a modification of a positive electrode.
FIG. 14 is a schematic plan view illustrating a modification of a positive electrode.

### DESCRIPTION OF EMBODIMENTS

In embodiments described below, the electrode for a secondary battery of the present disclosure is applied as both a positive electrode and a negative electrode, but the electrode for a secondary battery of the present disclosure is to be applied as at least one of a positive electrode or a negative electrode. The drawings referred to in the following description of embodiments are schematically shown, and the dimensional ratios and the like of the components drawn in the drawings may be different from real ones.

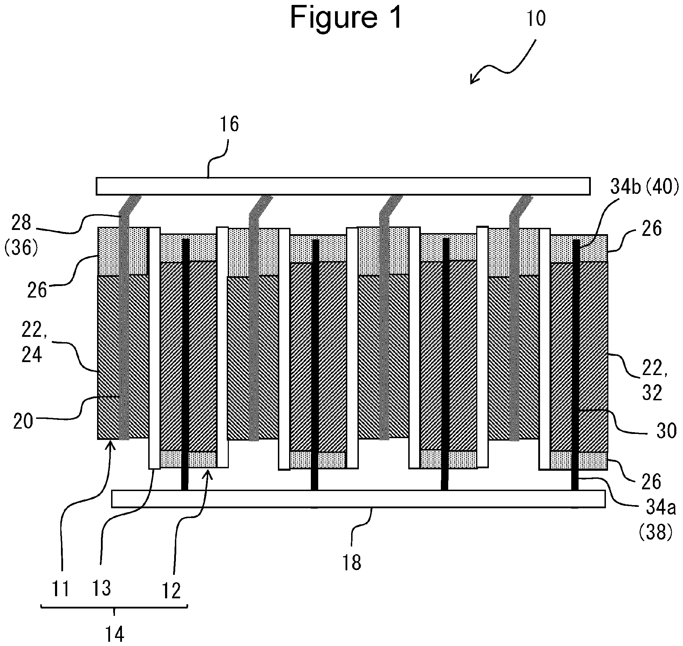

FIG. 1 is a schematic sectional view illustrating a main part of a secondary battery according to the present embodiment. A secondary battery 10 of the present embodiment includes a wound electrode assembly 14 in which a long positive electrode 11 and a long negative electrode 12 are wound with a separator 13 interposed therebetween, and a positive electrode collector plate 16 and a negative electrode collector plate 18 that are disposed above and below the electrode assembly 14 respectively. The secondary battery 10 of the present embodiment includes an electrolyte that is not illustrated. The secondary battery 10 of the present embodiment includes a battery case that is not illustrated and houses the electrode assembly, the collector plates, the electrolyte, and the like. The battery case includes, for example, a bottomed cylindrical case body having an opening, and a sealing assembly sealing the opening of the case body via a gasket.

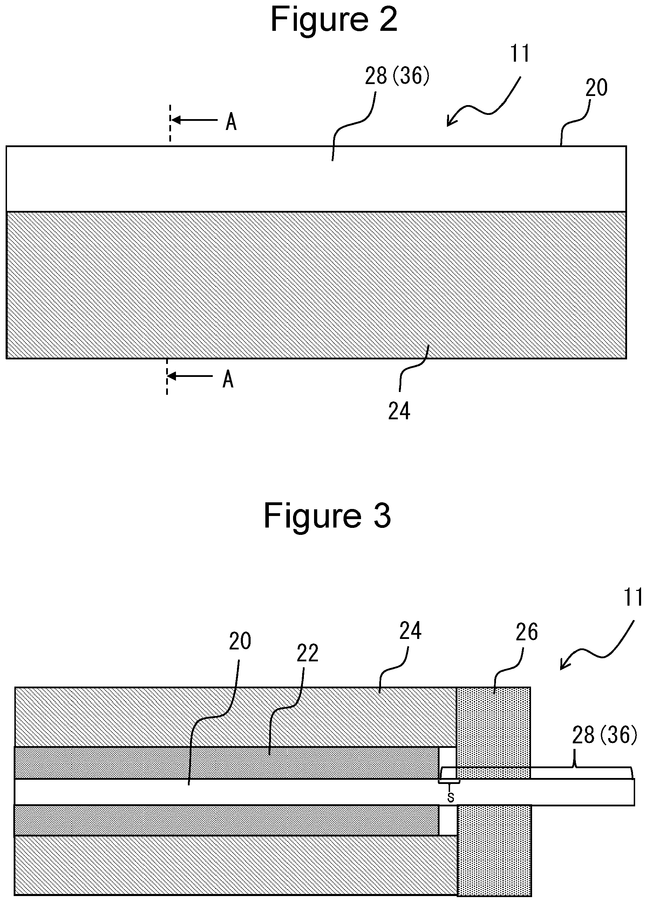

FIG. 2 is a schematic plan view illustrating a positive electrode before winding. In FIG. 2, an insulating protective layer described below is not illustrated. FIG. 3 is a schematic sectional view of the positive electrode taken along the line A-A in FIG. 2. The positive electrode 11 includes a positive electrode core member 20, a conductive adhesive layer 22 disposed on the positive electrode core member 20, a positive electrode mixture layer 24 disposed on the adhesive layer 22, and an insulating protective layer 26 containing a resin. The adhesive layer has conductivity in order to ensure the strength of the core member and reduce the interface resistance by reducing the amount of the active material penetrating the core member. The protective layer has an insulation property in order to suppress an internal short circuit. In the electrode according to the present disclosure, the conductive adhesive layer and the insulating protective layer are disposed in contact with the same surface of the core member.

The positive electrode core member 20 has an exposed part 28, at one end of the positive electrode core member 20 in the lateral direction, in which the adhesive layer 22 and the positive electrode mixture layer 24 are not disposed. On the exposed part 28, the protective layer 26 is disposed. As illustrated in FIG. 3, the protective layer 26 is disposed at a predetermined interval S from an end surface at one end of the adhesive layer 22 in the lateral direction, and on the interval S, the positive electrode mixture layer 24 is disposed. However, the protective layer 26 illustrated in FIG. 3 is thicker than the adhesive layer 22 and is in contact with an end surface at one end of the positive electrode mixture layer 24 in the lateral direction. As illustrated in FIG. 3, the protective layer 26 may be not disposed in a region having a predetermined width from the edge at the one end of the positive electrode core member 20 in the lateral direction. The adhesive layer 22, the positive electrode mixture layer 24, and the protective layer 26 may be disposed only on one surface of the positive electrode core member 20, but are desirably disposed on both surfaces of the positive electrode core member 20.

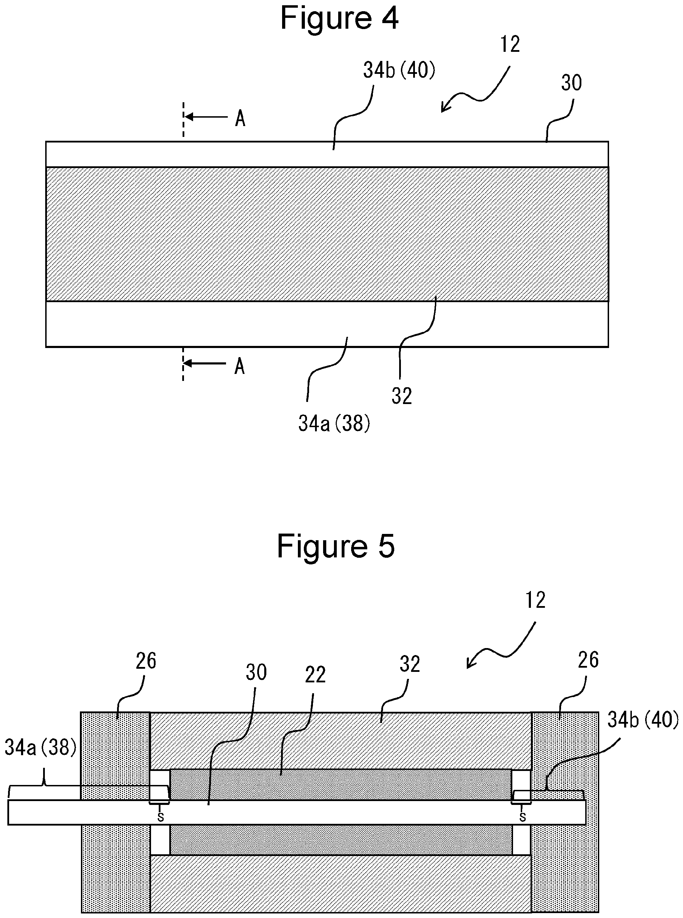

FIG. 4 is a schematic plan view illustrating a negative electrode before winding. In FIG. 4, an insulating protective layer is not illustrated. FIG. 5 is a schematic sectional view of the negative electrode taken along the line A-A in FIG. 4. The negative electrode 12 includes a negative electrode core member 30, a conductive adhesive layer 22 disposed on the negative electrode core member 30, a negative electrode mixture layer 32 disposed on the adhesive layer 22, and an insulating protective layer 26 containing a resin.

The negative electrode core member 30 has exposed parts 34a and 34b, at one end and the other end of the negative electrode core member 30 in the lateral direction, in which the adhesive layer 22 and the negative electrode mixture layer 32 are not disposed. On the exposed parts 34a and 34b, the insulating protective layer 26 is disposed. As illustrated in FIG. 5, the protective layer 26 disposed on the exposed part 34a is disposed at a predetermined interval S from an end surface at one end of the adhesive layer 22 in the lateral direction, and on the interval S, the negative electrode mixture layer 32 is disposed. However, the protective layer 26 illustrated in FIG. 5 and disposed on the exposed part 34a is thicker than the adhesive layer 22 and is in contact with an end surface at one end of the negative electrode mixture layer 32 in the lateral direction. For example, as illustrated in FIG. 5, the protective layer 26 may be not disposed in a region having a predetermined width from the edge at the one end of the negative electrode core member 30 in the lateral direction.

As illustrated in FIG. 5, the protective layer 26 disposed on the exposed part 34b is disposed at a predetermined interval S from an end surface at the other end of the adhesive layer 22 in the lateral direction, and on the interval S, the negative electrode mixture layer 32 is disposed. However, the protective layer 26 illustrated in FIG. 5 and disposed on the exposed part 34b is thicker than the adhesive layer 22 and is in contact with an end surface at the other end of the negative electrode mixture layer 32 in the lateral direction. As illustrated in FIG. 5, an end surface at the other end of the negative electrode core member 30 may be covered with the protective layer 26. The adhesive layer 22, the negative electrode mixture layer 32, and the protective layer 26 may be disposed only on one surface of the negative electrode core member 30, but are desirably disposed on both surfaces of the negative electrode core member 30.

In the positive electrode 11 illustrated in FIGs. 2 and 3, the exposed part 28 of the positive electrode core member 20 forms a protrusion 36 protruding from the one end of the adhesive layer 22 and from the one end of the positive electrode mixture layer 24 in the lateral direction. As illustrated in FIG. 1, when the positive electrode 11 is formed into the wound electrode assembly 14, the protrusion 36 protrudes from one end of the electrode assembly 14. The tip of the protrusion 36, of the positive electrode 11, protruding from the one end of the electrode assembly 14 is welded to the positive electrode collector plate 16. In the present embodiment, the tip of the protrusion 36 to which the positive electrode collector plate 16 is welded is a welding area. In this welding area, the protective layer 26 is preferably not disposed from the viewpoint of ensuring the bonding strength with a current collector. That is, as illustrated in FIG. 3, the welding area is preferably included in the exposed part 28 region where the protective layer 26 is not disposed.

In the negative electrode 12 illustrated in FIGs. 4 and 5, the exposed part 34a of the negative electrode core member 30 forms a first protrusion 38 protruding from the one end of the adhesive layer 22 and from the one end of the negative electrode mixture layer 32 in the lateral direction. As illustrated in FIG. 1, when the negative electrode 12 is formed into the wound electrode assembly 14, the first protrusion 38 protrudes from the other end of the electrode assembly 14. The first protrusion 38, of the negative electrode 12, protruding from the other end of the electrode assembly 14 is welded to the negative electrode collector plate 18. In the present embodiment, the tip of the first protrusion 38 to which the negative electrode collector plate 18 is welded is a welding area. In this welding area, the protective layer 26 is preferably not disposed from the viewpoint of ensuring the bonding strength with a current collector. That is, as illustrated in FIG. 5, the welding area is preferably included in the exposed part 34a region where the protective layer 26 is not disposed. In the negative electrode 12 illustrated in FIGs. 4 and 5, the exposed part 34b of the negative electrode core member 30 forms a second protrusion 40 protruding from the other end of the adhesive layer 22 and from the other end of the negative electrode mixture layer 32 in the lateral direction.

The positive electrode 11 is disposed and wound so as to face the negative electrode 12 with the separator 13 interposed therebetween. Therefore, dust generated during welding is less likely to adhere to the surface of the positive electrode mixture layer 24 facing the negative electrode 12 with the separator 13 interposed therebetween. The same applies to the negative electrode 12 side. Here, as in FIGs. 3 and 5, if a protective layer having a thickness of about a total thickness of the adhesive layer and the mixture layer is disposed on the exposed part, the degree of unevenness between the mixture layer surface and the protective layer surface can be reduced to restrain dust from entering a recessed portion.

If the protective layer and the adhesive layer are formed by a wet process without providing the interval S, a mixed region is formed in which a component of the protective layer and a component of the adhesive layer are mixed. The mixed region is inferior to the adhesive layer in conductivity, and inferior to the protective layer in insulation. Meanwhile, if the interval S is provided between the protective layer and the adhesive layer, generation of the mixed region can be suppressed. The interval S (distance between the protective layer and the adhesive layer) is preferably narrower than the width of the mixed region. The interval S can be determined by forming the mixed region in advance and measuring the size of the mixed region.

The mixture layer disposed on the interval S can restrain dust from entering the interval S. Although the interval S is illustrated as a space surrounded by the core member, the adhesive layer, the protective layer, and the mixture layer in each drawing, the mixture layer (mixture sheet) may be in contact with the core member when the mixture layer (mixture sheet) on the core member is pressurized. The protective layer illustrated in each of FIGs. 3 and 5 and FIGs. 8 and 10 described below has a thickness of about a total thickness of the adhesive layer and the mixture layer. An electrode including such a thick protective layer can be manufactured by applying a coating material for formation of an adhesive layer and a coating material for formation of a protective layer on a core member by a wet process, then forming a mixture layer, and then further applying the coating material for formation of a protective layer. In this manufacturing process, the protective layer is formed into two layers of a lower layer and an upper layer. The interval S is preferably provided when the adhesive layer and the protective layer (lower layer) are formed.

The electrode assembly 14 to which the positive electrode collector plate 16 and the negative electrode collector plate 18 are welded is housed in the case body together with the electrolyte. The negative electrode collector plate 18 is, for example, connected to the inner bottom surface of the case body by welding or the like. The positive electrode collector plate 16 is, for example, connected to a sealing plate by welding or the like.

As in the present embodiment, not only the separator 13 but also the insulating protective layer 26 is used to insulate the exposed part 28 of the positive electrode core member 20 and the negative electrode 12 from each other and to insulate the exposed parts (34a and 34b) of the negative electrode core member 30 and the positive electrode 11 from each other. Therefore, even when dust is generated by welding between the protrusion formed of the exposed part and the current collector and the dust is adhered to the electrode, the insulation property between the exposed part of one electrode and the other electrode can be ensured, and thus an internal short circuit can be suppressed. Furthermore, for example, even when winding deviation of the electrode or the separator removes the separator from between the protrusion formed of the exposed part of one electrode and the other electrode, the insulation property between the electrodes can be ensured by the insulating protective layer, and thus an internal short circuit can be suppressed.

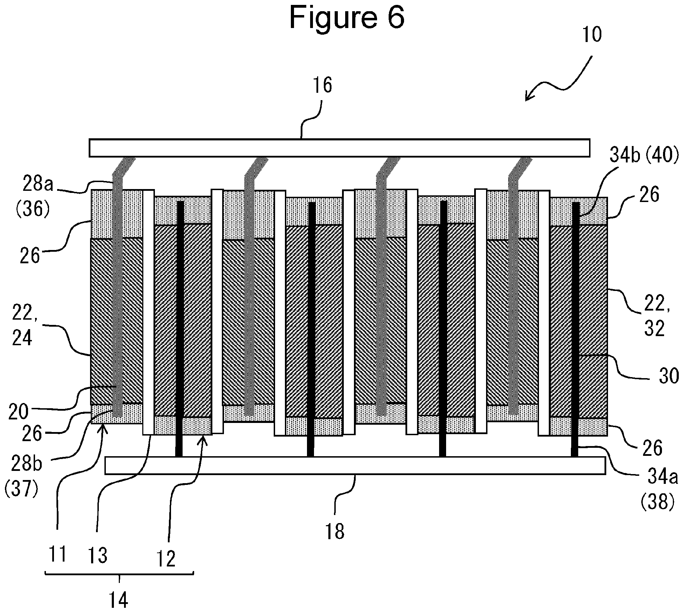

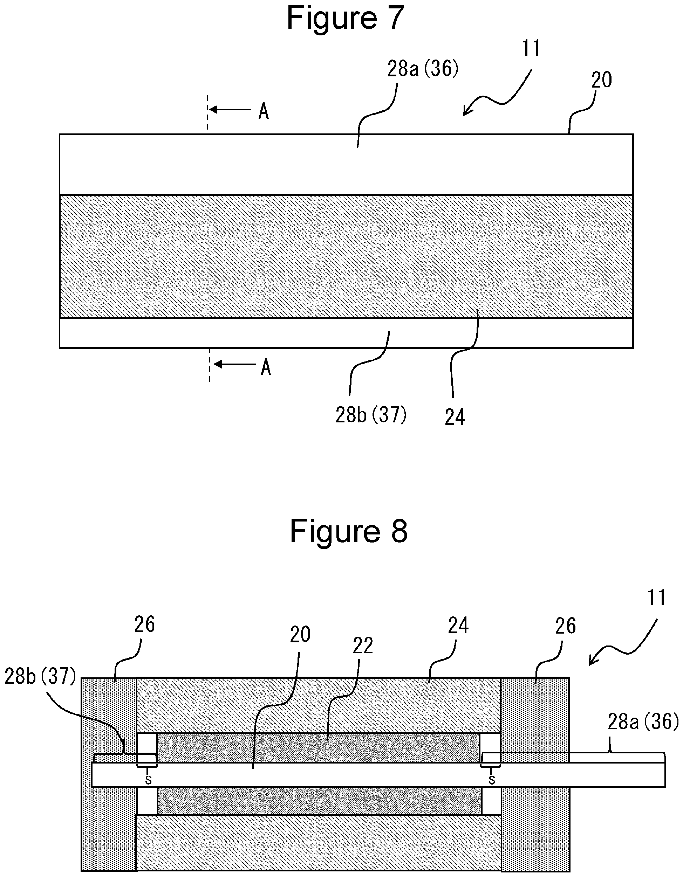

FIG. 6 is a schematic sectional view illustrating a modification of a main part of a secondary battery according to the present embodiment. FIG. 7 is a schematic plan view illustrating a positive electrode before winding. In FIG. 7, an insulating protective layer is not illustrated. FIG. 8 is a schematic sectional view of the positive electrode taken along the line A-A in FIG. 7. The positive electrode 11 included in the wound electrode assembly 14 illustrated in FIG. 6 has exposed parts 28a and 28b, at one end and the other end of a positive electrode core member 20 in the lateral direction, in which an adhesive layer 22 and a positive electrode mixture layer 24 are not disposed. On the exposed parts 28a and 28b, an insulating protective layer 26 containing a resin is disposed. As illustrated in FIG. 8, the protective layer 26 disposed on the exposed part 28a is disposed at a predetermined interval S from an end surface at one end of the adhesive layer 22 in the lateral direction. However, the protective layer 26 illustrated in FIG. 8 and disposed on the exposed part 28a is thicker than the adhesive layer 22 and is in contact with an end surface at one end of the positive electrode mixture layer 24 in the lateral direction. As illustrated in FIG. 8, the protective layer 26 may be not disposed in a region having a predetermined width from the edge at the one end of the positive electrode core member 20 in the lateral direction. As illustrated in FIG. 8, the protective layer 26 disposed on the exposed part 28b is disposed at a predetermined interval S from an end surface at the other end of the adhesive layer 22 in the lateral direction. However, the protective layer 26 illustrated in FIG. 8 and disposed on the exposed part 28b is thicker than the adhesive layer 22 and is in contact with an end surface at the other end of the positive electrode mixture layer 24 in the lateral direction. As illustrated in FIG. 8, an end surface at the other end of the positive electrode core member 20 may be covered with the protective layer 26.

The positive electrode 11 is disposed and wound so as to face the negative electrode 12 with the separator 13 interposed therebetween. Therefore, dust generated during welding is less likely to adhere to the surface of the positive electrode mixture layer 24 facing the negative electrode 12 with the separator 13 interposed therebetween. Here, as in FIG 8, if a protective layer having a thickness of about a total thickness of the adhesive layer and the mixture layer is disposed on the exposed part, the degree of unevenness between the mixture layer surface and the protective layer surface can be reduced to restrain dust from entering a recessed portion.

In the positive electrode 11 illustrated in FIGs. 7 and 8, the exposed part 28a of the positive electrode core member 20 forms a first protrusion 36 protruding from the one end of the adhesive layer 22 and from the one end of the positive electrode mixture layer 24 in the lateral direction. As illustrated in FIG. 6, when the positive electrode 11 is formed into the wound electrode assembly 14, the first protrusion 36 protrudes from one end of the electrode assembly 14. The first protrusion 36, of the positive electrode 11, protruding from the one end of the electrode assembly 14 is welded to the positive electrode collector plate 16. In the positive electrode 11 illustrated in FIGs. 7 and 8, the exposed part 28b of the positive electrode core member 20 forms a second protrusion 37 protruding from the other end of the adhesive layer 22 and from the other end of the positive electrode mixture layer 24 in the lateral direction.

Hereinafter, modifications of the electrode for a secondary battery will be described using the positive electrode 11 as an example. All of the modifications described below can be applied to the negative electrode 12.

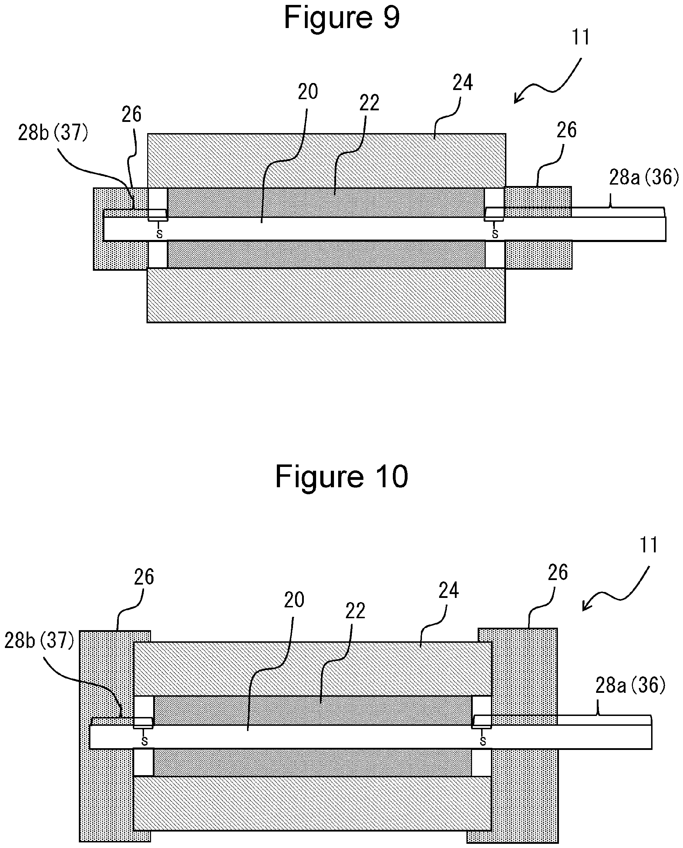

FIG. 9 is a schematic sectional view illustrating a modification of the positive electrode taken along the line A-A in FIG. 7. As illustrated in FIG. 8, the protective layer 26 disposed on the exposed part 28a is preferably thicker than the adhesive layer 22 and is preferably in contact with an end surface at one end of the positive electrode mixture layer 24 from the viewpoint of suppressing an internal short circuit of the battery, but as illustrated in FIG. 9, the protective layer 26 may have a thickness of about the same as or less than the thickness of an adhesive layer 22 and may be not in contact with an end surface at one end of a positive electrode mixture layer 24. As illustrated in FIG. 8, the protective layer 26 disposed on the exposed part 28b is preferably thicker than the adhesive layer 22 and is preferably in contact with an end surface at the other end of the positive electrode mixture layer 24 from the viewpoint of suppressing an internal short circuit of the battery, but as illustrated in FIG. 9, the protective layer 26 may have a thickness of about the same as or less than the thickness of the adhesive layer 22 and may be not in contact with an end surface at the other end of the positive electrode mixture layer 24. Although not illustrated, the positive electrode mixture layer 24 may be disposed so as to cover a part of the outer surface of the protective layer 26.

Even in the positive electrode of FIG. 9, the mixture layer disposed on an interval S can restrain dust from entering the interval S while the interval S suppresses generation of a mixed region. A protective layer is disposed on an exposed part, and thus an internal short circuit can be suppressed.

FIG. 10 is a schematic sectional view illustrating a modification of the positive electrode taken along the line A-A in FIG. 7. A protective layer 26 disposed on an exposed part 28a is more preferably thicker than the total thickness of an adhesive layer 22 and a positive electrode mixture layer 24 and more preferably covers a part of the outer surface of the positive electrode mixture layer 24 from the viewpoint of suppressing an internal short circuit of the battery. The protective layer 26 disposed on an exposed part 28b is more preferably thicker than the total thickness of the adhesive layer 22 and the positive electrode mixture layer 24 and more preferably covers a part of the outer surface of the positive electrode mixture layer 24 from the viewpoint of suppressing an internal short circuit of the battery.

The configuration in FIG. 10 is significant in that the corners of the end surfaces of the positive electrode mixture layer are covered with the protective layer. As a result, the corners of the end surfaces of the positive electrode mixture layer are prevented from pressurizing the separator. In an electrode assembly, for example, a negative electrode may expand and contract due to charge and discharge, and a corner portion of an end surface of a mixture layer may apply a pressure to a separator locally due to expansion of the electrode, and thus a load may be applied to the separator. However, a protective layer generally has a smaller elastic modulus and is softer than a positive electrode mixture layer, and therefore the load to the separator by the mixture layer end surface can be reduced by covering end surfaces of a positive electrode mixture layer with a protective layer.

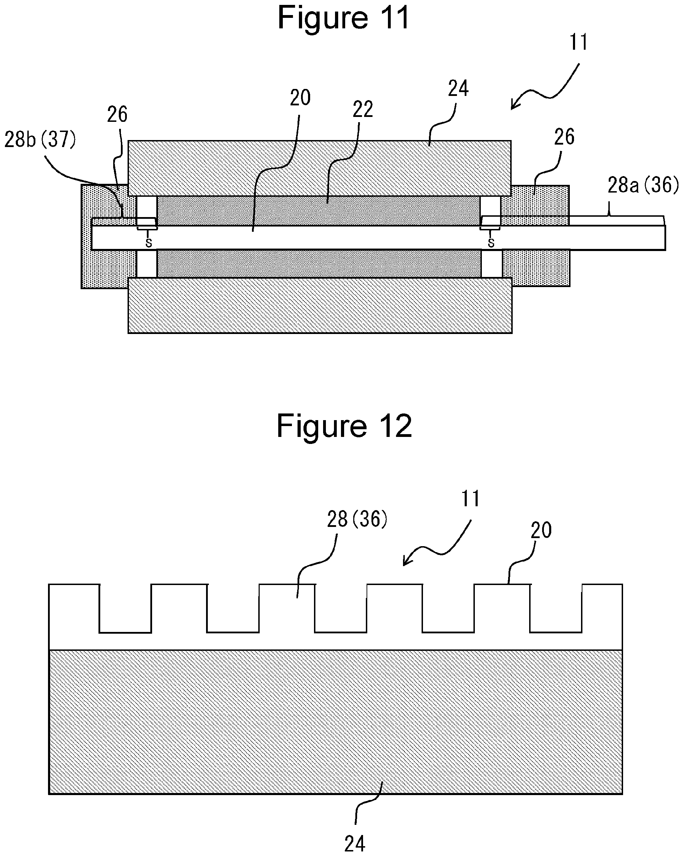

FIG. 11 is a schematic sectional view illustrating a modification of the positive electrode taken along the line A-A in FIG. 7. As illustrated in FIG. 11, a part of one end or the other end of a positive electrode mixture layer 24 in the longitudinal direction may bite into a protective layer 26.

FIG. 12 is a schematic plan view illustrating a modification of the positive electrode. The positive electrode 11 in FIG. 12 is in a state before winding, and a protective layer 26 is not illustrated. In the positive electrode 11 illustrated in FIG. 12, an exposed part 28 at one end of a positive electrode core member 20 in the lateral direction forms a protrusion 36 protruding from one end of an adhesive layer 22 and from one end of a positive electrode mixture layer 24 in the lateral direction, and a plurality of protrusions 36 are formed at an interval in the longitudinal direction of the positive electrode core member 20. When the positive electrode 11 is formed into the wound electrode assembly 14, the plurality of protrusions 36 formed at an interval protrude from one end of the electrode assembly 14. The tips of the plurality of protrusions 36 protruding from the one end of the electrode assembly 14 are welded to the positive electrode collector plate 16. Thus, the tip of each protrusion to which the positive electrode collector plate 16 is welded is a welding area, and therefore the protective layer 26 is preferably disposed on each protrusion 36 (exposed part 28) excluding the welding area from the viewpoint of ensuring the bonding strength with a current collector.

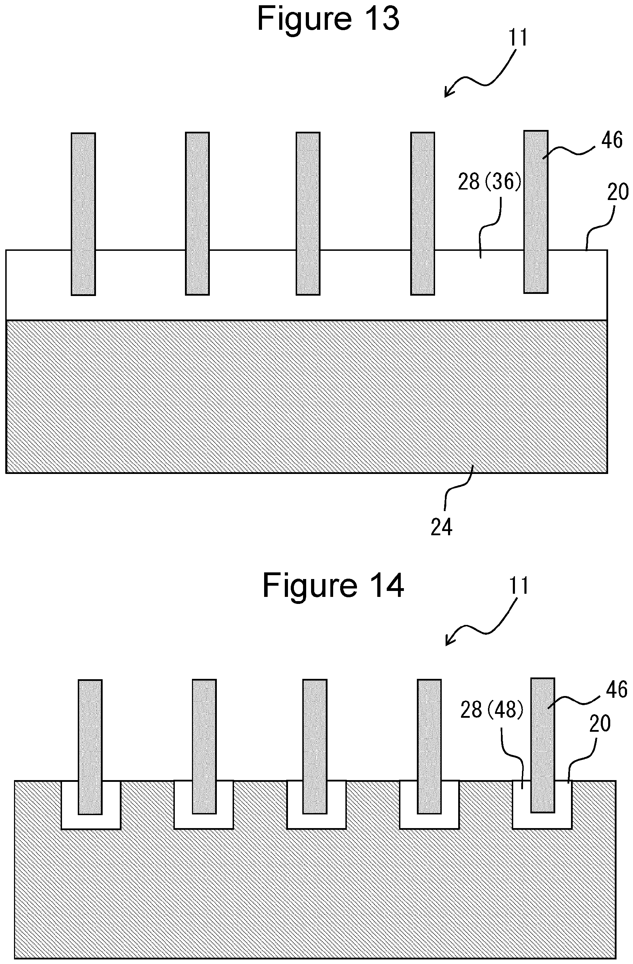

FIG. 13 is a schematic plan view illustrating a modification of the positive electrode. The positive electrode 11 in FIG. 13 is in a state before winding, and a protective layer 26 is not illustrated. In the positive electrode 11 illustrated in FIG. 13, an exposed part 28 at one end of a positive electrode core member 20 in the lateral direction forms a protrusion 36 protruding from one end of an adhesive layer 22 and from one end of a positive electrode mixture layer 24 in the lateral direction. A plurality of lead wires 46 are attached by welding or the like to the protrusion 36 at a predetermined interval in the longitudinal direction of the positive electrode core member 20. When the positive electrode 11 is formed into the wound electrode assembly 14, the plurality of lead wires 46 protrude from one end of the electrode assembly 14. The tips of the plurality of lead wires 46 protruding from the one end of the electrode assembly 14 are welded to the positive electrode collector plate 16. Not only each exposed part 28 but also each lead wire 46 is desirably coated with the protective layer 26. However, the tip of each lead wire 46 to which the positive electrode collector plate 16 is welded is a welding area, and therefore each lead wire 46 excluding the welding area is preferably coated with the protective layer 26 from the viewpoint of ensuring the bonding strength with a current collector. Instead of the protective layer 26, an insulating tape can be attached to the surface of the lead wire 46. An insulating tape is preferably also attached to the welding area after welding.

FIG. 14 is a schematic plan view illustrating a modification of the positive electrode. The positive electrode 11 in FIG. 14 is in a state before winding, and a protective layer 26 is not illustrated. In the positive electrode 11 illustrated in FIG. 14, exposed parts 28 at one end of a positive electrode core member 20 in the lateral direction are formed at an interval in the longitudinal direction of the positive electrode core member 20 and form recesses 48 recessed from one end of an adhesive layer 22 and from one end of a positive electrode mixture layer 24 in the lateral direction. A plurality of lead wires 46 are attached to the recesses 48 by welding or the like. When the positive electrode 11 is formed into the wound electrode assembly 14, the plurality of lead wires 46 protrude from one end of the electrode assembly 14. The tips of the plurality of lead wires 46 protruding from the one end of the electrode assembly 14 are welded to the positive electrode collector plate 16. Not only each exposed part 28 but also each lead wire 46 is desirably coated with the protective layer 26. However, the tip of each lead wire 46 to which the positive electrode collector plate 16 is welded is a welding area, and therefore each lead wire 46 excluding the welding area is preferably coated with the protective layer 26 from the viewpoint of ensuring the bonding strength with a current collector. Instead of the protective layer 26, an insulating tape can be attached to the surface of the lead wire 46. An insulating tape is preferably also attached to the welding area after welding.

Hereinafter, materials and the like will be described that are used in the positive electrode 11, the negative electrode 12, the separator 13, and the electrolyte.

### [Positive Electrode]

As the positive electrode core member 20, a foil of a metal, such as aluminum or an aluminum alloy, that is stable in a potential range of the positive electrode 11, a film in which the metal is disposed on its surface layer, or the like can be used.

The positive electrode mixture layer 24 contains positive electrode active material particles, a binder, and the like. In addition, the positive electrode mixture layer 24 preferably contains a conductive agent from the viewpoint of, for example, being able to improve the conductivity of the layer.

Examples of the positive electrode active material particles include lithium-transition metal oxide particles containing a transition metal element such as Co, Mn, or Ni. Examples of the lithium-transition metal oxide particles include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O₂, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, or B, 0 < x ≤ 1.2, 0 < y ≤ 0.9, 2.0 ≤ z ≤ 2.3). One kind of them may be used, or a plurality of kinds of them may be mixed and used. The positive electrode active material particles preferably contain lithium-nickel composite oxide particles such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, or B, 0 < x ≤ 1.2, 0 < y ≤ 0.9, 2.0 ≤ z ≤ 2.3) from the viewpoint of being able to increase the capacity of the secondary battery 10.

Examples of the conductive agent include carbon-based particles such as carbon black (CB), acetylene black (AB), Ketjenblack, and graphite. These may be used singly, or greater than or equal to two of them may be used in combination.

Examples of the binder include fluorine-based resins such as polytetrafluoroethylene (PTFE) and polyvinylidene fluoride (PVdF), polyacrylonitrile (PAN), polyimide-based resins, acrylic resins, polyolefin-based resins, carboxymethylcellulose (CMC) and salts thereof (such as CMC-Na, CMC-K, CMC-NH₄, and partially neutralized salts), and polyethylene oxide (PEO). These may be used singly, or greater than or equal to two of them may be used in combination.

The positive electrode mixture layer 24 includes a first region, a second region, and a third region, in order from a side of the positive electrode core member 20 in the thickness direction, that are obtained by dividing the positive electrode mixture layer into three parts having an equal thickness, and when the content of the binder in the first region is represented by a, the content of the binder in the second region is represented by b, and the content of the binder in the third region is represented by c, a relation of (c - a)/(a + b + c) ≤ ±10% is preferably satisfied. When this condition is satisfied, the binder is uniformly present in the positive electrode mixture layer 24. The above condition can be satisfied, for example, by forming the positive electrode mixture layer 24 by a dry process described below.

The adhesive layer 22 has a function of bonding the positive electrode core member 20 and the positive electrode mixture layer 24 together. The adhesive layer 22 has conductivity in order to ensure electrical conduction between the core member and the mixture layer. The adhesive layer 22 may contain a binder and a conductive agent. The adhesive layer 22 preferably has a volume resistivity of less than or equal to 10⁴ Ωcm. The adhesive layer 22 has a thickness of, for example, greater than or equal to 0.1 µm and less than or equal to 10 µm.

Examples of the conductive agent contained in the adhesive layer 22 include carbon-based particles such as carbon black (CB), acetylene black (AB), Ketjenblack, and graphite. The content of the conductive agent in the adhesive layer 22 is preferably greater than or equal to 50 mass% and less than or equal to 95 mass%, more preferably greater than or equal to 55 mass% and less than or equal to 90 mass%, and particularly preferably greater than or equal to 60 mass% and less than or equal to 85 mass%. If the adhesive layer 22 has such a relatively large content of the conductive agent, the interface resistance can be small.

Examples of the binder contained in the adhesive layer 22 include fluorine-based resins such as polytetrafluoroethylene (PTFE) and polyvinylidene fluoride (PVdF), polyacrylonitrile (PAN), polyimide-based resins, acryl-based resins, and polyolefin-based resins. The content of the binder in the adhesive layer 22 is preferably, for example, greater than or equal to 20 mass% and less than or equal to 60 mass%.

The adhesive layer 22 preferably contains an insulating filler. If the adhesive layer 22 contains an insulating filler, for example, when an internal short circuit is caused by a conductive foreign substance, the insulating filler in the adhesive layer 22 serves as a resistance component to suppress an increase in a short circuit current between the positive and the negative electrodes.

The protective layer 26 contains a resin and has an insulation property. The protective layer 26 preferably has a volume resistivity of, for example, greater than or equal to 10⁷ Ω·cm from the viewpoint of suppressing occurrence of an internal short circuit of the battery. Examples of the resin used in the protective layer 26 include polyethylene, polypropylene, polyphenylene ether, polybenzimidazole, polyimides, polyetherimide, polyamideimides, polyphenylene sulfide, polyethersulfone, polysulfone, polyetherketone, polymethylpentene, aramid, polyvinylidene fluoride, polyamides, polyethylene terephthalate, polybutylene terephthalate, polyarylate, and polyacetal.

The protective layer 26 preferably contains an insulating filler. The insulating filler is preferably, for example, an inorganic material having a resistivity of greater than or equal to 10¹² Ωcm, and examples of the material include metal oxides, metal nitrides, and metal fluorides. Examples of the metal oxides include aluminum oxide, titanium oxide, zirconium oxide, silicon oxide, manganese oxide, magnesium oxide, and nickel oxide. Examples of the metal nitrides include boron nitride, aluminum nitride, magnesium nitride, and silicon nitride. Examples of the metal fluorides include aluminum fluoride, lithium fluoride, sodium fluoride, magnesium fluoride, calcium fluoride, barium fluoride, aluminum hydroxide, and boehmite. The content of the insulating filler in the adhesive layer 22 is preferably in a range of greater than or equal to 1 mass% and less than or equal to 10 mass%.

### [Negative Electrode]

As the negative electrode core member 30, a foil of a metal, such as copper, that is stable in a potential range of the negative electrode 12, a film in which the metal is disposed on its surface layer, or the like can be used. The negative electrode mixture layer 32 contains, for example, a negative electrode active material, a binder, and the like.

Examples of the negative electrode active material include metal lithium, lithium alloys such as a lithium-aluminum alloy, a lithium-lead alloy, a lithium-silicon alloy, and a lithium-tin alloy, carbon materials such as graphite, coke, and organic substance fired bodies, and metal oxides such as SnO₂, SnO, and TiO₂. These may be used singly or in combination of greater than or equal to two kinds thereof.

Examples of the binder contained in the negative electrode mixture layer 32 include fluorine-based resins such as polytetrafluoroethylene (PTFE) and polyvinylidene fluoride (PVdF), polyacrylonitrile (PAN), polyimide-based resins, acrylic resins, polyolefin-based resins, carboxymethylcellulose (CMC) and salts thereof (such as CMC-Na, CMC-K, CMC-NH₄, and partially neutralized salts), and polyethylene oxide (PEO), as in the case of the positive electrode 11. These may be used singly, or greater than or equal to two of them may be used in combination.

The negative electrode mixture layer 32 includes a first region, a second region, and a third region, in order from a side of the negative electrode core member 30 in the thickness direction, that are obtained by dividing the negative electrode mixture layer into three parts having an equal thickness, and when the content of the binder in the first region is represented by a, the content of the binder in the second region is represented by b, and the content of the binder in the third region is represented by c, a relation of (c - a)/(a + b + c) ≤ ±10% is preferably satisfied. When this condition is satisfied, the binder is uniformly present in the negative electrode mixture layer 32. The above condition can be satisfied, for example, by forming the negative electrode mixture layer 32 by a dry process described below.

The adhesive layer 22 and the protective layer 26 on the negative electrode 12 side may be similar to those on the positive electrode 11 side.

### [Separator]

As the separator 13, for example, a porous sheet having an ion permeation property and an insulation property is used. Specific examples of the porous sheet include fine porous thin films, woven fabrics, and nonwoven fabrics. As a material of the separator 13, olefin-based resins such as polyethylene and polypropylene, cellulose, and the like are suitable. The separator 13 may be a laminate including a cellulose fiber layer and a thermoplastic resin fiber layer such as an olefin-based resin. The separator 13 may be a multilayer separator including a polyethylene layer and a polypropylene layer, and a separator 13 may be used that has a surface to which a material such as an aramid-based resin or a ceramic is applied.

### [Electrolyte]

The electrolyte contains a solvent such as a non-aqueous solvent and an electrolyte salt dissolved in the solvent. The electrolyte is not limited to a liquid electrolyte (electrolytic solution), and may be a solid electrolyte in which a gel polymer or the like is used. Examples of a solvent that can be used as the non-aqueous solvent include esters, ethers, nitriles such as acetonitrile, amides such as dimethylformamide, and mixed solvents of greater than or equal to two of them. The non-aqueous solvent may contain a halogen-substituted product in which at least a part of hydrogen in a solvent described above is substituted with a halogen atom such as fluorine.

Examples of the esters include cyclic carbonic acid esters such as ethylene carbonate (EC), propylene carbonate (PC), and butylene carbonate, chain carbonic acid esters such as dimethyl carbonate (DMC), methyl ethyl carbonate (EMC), diethyl carbonate (DEC), methyl propyl carbonate, ethyl propyl carbonate, and methyl isopropyl carbonate, cyclic carboxylic acid esters such as γ-butyrolactone and γ-valerolactone, and chain carboxylic acid esters such as methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

As the halogen-substituted product, an ester is preferably used such as a fluorinated cyclic carbonic acid ester such as fluoroethylene carbonate (FEC), a fluorinated chain carbonic acid ester, or a fluorinated chain carboxylic acid ester such as methyl fluoropropionate (FMP).

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, n is 1 or 2), LiB₁₀Cl₁₀, LiCl, LiBr, LiI, chloroborane lithium, lower aliphatic lithium carboxylates, and borates such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) {l and m are integers of greater than or equal to 1}. These lithium salts may be used singly, or a plurality of kinds of them may be mixed and used. Among these lithium salts, LiPF₆ is preferably used from the viewpoints of ion conductivity, electrochemical stability, and the like. The concentration of the lithium salt is preferably greater than or equal to 0.8 and less than or equal to 1.8 mol in 1 L of the non-aqueous solvent.

Hereinafter, an example of the method for manufacturing an electrode for a secondary battery of the present embodiment will be described. The method for manufacturing an electrode for a secondary battery of the present embodiment can be applied to both a positive electrode and a negative electrode. In a case where a positive electrode is manufactured, the mixture, the active material, and the core member described below are to be regarded as a positive electrode mixture, a positive electrode active material, and a positive electrode core member, and in a case where a negative electrode is manufactured, the mixture, the active material, and the core member described below are to be regarded as a negative electrode mixture, a negative electrode active material, and a negative electrode core member.

The method for manufacturing an electrode for a secondary battery includes an adhesive layer forming step, a protective layer forming step, and a mixture layer forming step.

### (Adhesive Layer Forming Step)

In the adhesive layer forming step, an adhesive layer is formed by a wet process on a core member excluding an exposed part. The term "wet process" refers to a method in which a coating material containing a solvent is used. Specifically, a coating material containing a binder, a conductive agent, an insulating filler, a solvent, and the like is applied onto a core member in a state where an exposed part remains, and thus an adhesive layer is formed. The solvent is, for example, an organic solvent, an aqueous solvent, or the like and is not particularly limited. However, a solvent is preferable in which the binder can be dissolved.

### (Protective Layer Forming Step)

In the protective layer forming step, a protective layer is formed by a wet process on the exposed part of the core member. Specifically, a coating material containing a resin, a solvent, and the like is applied onto the exposed part of the core member to form a protective layer. The solvent is, for example, an organic solvent, an aqueous solvent, or the like and is not particularly limited. However, a solvent is preferable in which the resin can be dissolved. The protective layer forming step may be performed simultaneously with the adhesive layer forming step, or may be performed after the adhesive layer forming step and before the mixture layer forming step. The protective layer forming step may be performed after the mixture layer forming step.

The coating material is applied using, for example, a slit die coater, a reverse roll coater, a lip coater, a blade coater, a knife coater, a gravure coater, or a dip coater.

### (Mixture Layer Forming Step)

In the mixture layer forming step, a mixture sheet is produced by a dry process, and the produced mixture sheet is attached to the adhesive layer to form a mixture layer. The term "dry process" refers to a process in which a mixture sheet is produced in a state without a solvent. A method of producing a mixture sheet by a dry process includes, for example, a mixing step of mixing an active material, a binder, a conductive agent, and the like to produce electrode mixture particles having a solid content concentration of substantially 100%, a rolling step of rolling the electrode mixture particles into a sheet form to produce a mixture sheet, and a compressing step of compressing the mixture sheet to produce a high-density mixture sheet.

The binder is preferably a fibrous binder. The fibrous binder is preferably PTFE particles belonging to fine powders that can undergo fibrillation.

In the mixing step, for example, a conventionally known mechanical stirring mixer can be used for mixing raw materials such as the active material, the binder, and the conductive agent. Suitable examples of the mixer include kneaders, which are devices capable of applying a mechanical shear force, such as cutter mills, pin mills, bead mills, fine particle composing devices (devices in which a shear force is generated between a special-shaped rotor rotating at a high speed and a collision plate inside a tank), granulators, twin-screw extrusion kneaders, and planetary mixers, and the mixer is preferably a cutter mill, fine particle composing device, granulator, or twin-screw extrusion kneader.

The mixing step may include a step of mixing the active material and the conductive agent to produce a coating active material, and a step of mixing the coating active material and the fibrous binder. As the method of mixing the active material and the conductive agent, for example, a mechano-fusion method may be used. The mechano-fusion method is a dry treatment method performed in a mechano-fusion reactor including a compression tool inside and a cylindrical chamber rotating at a high speed. Examples of the mechano-fusion reactor include a mill "NOBILTA" (registered trademark) and a mill "MECHANO FUSION" (registered trademark) manufactured by HOSOKAWA MICRON CORPORATION (Japan), a mill "Hybridiser" (trademark) manufactured by Nara Machinery Co., Ltd., "BALANCE GRAN" manufactured by FREUND-TURBO CORPORATION, and "COMPOSI" manufactured by Nippon Coke & Engineering Co., Ltd.

In the rolling step, for example, the electrode mixture particles are rolled using two facing rolls into a sheet form. The two rolls are disposed with a predetermined gap and rotate in the same direction. The electrode mixture particles are supplied into the gap between the two rolls and thus compressed by the two rolls and spread into a sheet. The obtained mixture sheet may be passed through the gap between the two rolls a plurality of times, or may be spread one or more times using other rolls having a different roll diameter, a peripheral speed, a gap, and the like. The electrode mixture particles may be hot-pressed using heated rolls.

In the compressing step, for example, the mixture sheet is compressed using two facing rolls to produce a high-density mixture sheet. The two rolls are, for example, the same in roll diameter and disposed with a predetermined gap, and rotate in the same direction at the same peripheral speed. The two rolls may, for example, apply a linear pressure of greater than or equal to 1 t/cm and less than or equal to 3 t/cm. The two rolls may, for example, apply a linear pressure of greater than or equal to 0.1 t/cm and less than or equal to 3 t/cm. The temperatures of the two rolls are not particularly limited, and may be, for example, room temperature. The active material density of the high-density mixture sheet is, for example, greater than or equal to 3.0 g/cm³ and less than or equal to 4.0 g/cm³ in the case of a positive electrode mixture layer, and greater than or equal to 1.2 g/cm³ and less than or equal to 2.0 g/cm³ in the case of a negative electrode mixture layer. The thickness of the mixture sheet is, for example, greater than or equal to 30 µm and less than or equal to 300 µm, and preferably greater than or equal to 50 µm and less than or equal to 200 µm.

The mixture sheet thus obtained is attached to the adhesive layer formed on the core member to form a mixture layer. For example, the mixture sheet and the adhesive layer on the core member facing to each other are supplied into a gap between two facing rolls, and thus the mixture sheet is attached to the adhesive layer formed on the core member.

The mixture layer may be formed by a wet process. For example, the mixture layer may be formed by applying a coating material containing an active material, a binder, a conductive agent, and a solvent onto the adhesive layer to form a coating film, and rolling the coating film. However, the pressure applied to the core member can be smaller and thus the core member is less likely to be damaged in the method of producing an electrode for a secondary battery by forming a mixture sheet by a dry process and attaching the mixture sheet to an adhesive layer than in the method of producing an electrode for a secondary battery by forming and rolling a coating film on an adhesive layer by a wet process.

### REFERENCE SIGNS LIST

- 10: Secondary battery
- 11: Positive electrode
- 12: Negative electrode
- 13: Separator
- 14: Electrode assembly
- 16: Positive electrode collector plate
- 18: Negative electrode collector plate
- 20: Positive electrode core member
- 22: Adhesive layer
- 24: Positive electrode mixture layer
- 26: Protective layer
- 28, 28a, 28b, 34a, 34b: Exposed part
- 30: Negative electrode core member
- 32: Negative electrode mixture layer
- 36, 38: Protrusion or first protrusion
- 37, 40: Second protrusion
- 46: Lead wire
- 48: Recesses

## Claims

1. An electrode for a secondary battery, the electrode comprising: a core member; an adhesive layer disposed on the core member and being conductive; a mixture layer disposed on the adhesive layer; and a protective layer containing a resin and being insulating, wherein
the core member has an exposed part at one end of the core member in a lateral direction, the exposed part in which the adhesive layer and the mixture layer are not disposed,
the protective layer is disposed on the exposed part at the one end and is at a predetermined interval from an end surface at one end of the adhesive layer in a lateral direction.

2. The electrode for a secondary battery according to claim 1, wherein
the exposed part at the one end forms a first protrusion protruding from the one end of the adhesive layer in the lateral direction and from one end of the mixture layer in a lateral direction,
the first protrusion to be welded to a collector plate that collects a current of the electrode for a secondary battery.

3. The electrode for a secondary battery according to claim 2, wherein a plurality of the first protrusions are formed at an interval in a longitudinal direction of the core member.

4. The electrode for a secondary battery according to claim 1, wherein
the exposed part at the one end forms a first protrusion protruding from the one end of the adhesive layer in the lateral direction and from one end of the mixture layer in a lateral direction, a plurality of lead wires are attached to the first protrusion at a predetermined interval in a longitudinal direction of the core member, the plurality of lead wires to be welded to a collector plate that collects a current of the electrode for a secondary battery, and
the plurality of lead wires are coated with the protective layer containing a resin and being insulating.

5. The electrode for a secondary battery according to claim 1, wherein
the exposed part at the one end forms recesses in which the exposed part at the one end is recessed at an interval in a longitudinal direction of the core member and recessed from the one end of the adhesive layer in the lateral direction and from one end of the mixture layer in a lateral direction,
a plurality of lead wires are attached to the recesses, the plurality of lead wires to be welded to a collector plate that collects a current of the electrode for a secondary battery, and
the plurality of lead wires are coated with the protective layer containing a resin and being insulating.

6. The electrode for a secondary battery according to any one of claims 1 to 5, wherein
the core member has an exposed part at another end of the core member in the lateral direction, the exposed part in which the adhesive layer and the mixture layer are not disposed,
a protective layer containing a resin and being insulating is disposed on the exposed part at the another end and is at a predetermined interval from an end surface at another end of the adhesive layer in the lateral direction,
the exposed part at the another end forms a second protrusion protruding from the another end of the adhesive layer in the lateral direction and from another end of the mixture layer in the lateral direction.

7. The electrode for a secondary battery according to claim 2 or 3, wherein the protective layer is not disposed in a welding area of the first protrusion, the welding area to which the collector plate is to be welded.

8. The electrode for a secondary battery according to claim 4 or 5, wherein the plurality of lead wires have a welding area to which the collector plate is to be welded, the welding area not coated with the protective layer.

9. The electrode for a secondary battery according to any one of claims 1 to 8, wherein the protective layer disposed on the exposed part at the one end is thicker than the adhesive layer and is in contact with an end surface at the one end of the mixture layer in the lateral direction.

10. The electrode for a secondary battery according to claim 9, wherein the protective layer disposed on the exposed part at the one end is thicker than a total thickness of the adhesive layer and the mixture layer and covers a part of an outer surface of the mixture layer.

11. The electrode for a secondary battery according to claim 6, wherein the protective layer disposed at the exposed part at the another end is thicker than the adhesive layer and is in contact with an end surface at the another end of the mixture layer in the lateral direction.

12. The electrode for a secondary battery according to claim 11, wherein the protective layer disposed at the exposed part at the another end is thicker than the total thickness of the adhesive layer and the mixture layer and covers a part of the outer surface of the mixture layer.

13. The electrode for a secondary battery according to any one of claims 1 to 12, wherein the adhesive layer contains an insulating filler.

14. The electrode for a secondary battery according to any one of claims 1 to 13, wherein
the mixture layer contains an active material and a binder,
the mixture layer includes a first region, a second region, and a third region in order from a side of the core member in a thickness direction, the first region, the second region, and the third region that are obtained by dividing the mixture layer into three parts having an equal thickness, and when a content of the binder in the first region is represented by a, a content of the binder in the second region is represented by b, and a content of the binder in the third region is represented by c, a relation of (c - a)/(a + b + c) ≤ ±10% is satisfied.

15. The electrode for a secondary battery according to any one of claims 1 to 14, wherein
the adhesive layer contains a conductive agent and a binder, and
the adhesive layer has a content of the conductive agent of greater than or equal to 50 mass% and less than or equal to 95 mass%.

16. The electrode for a secondary battery according to any one of claims 1 to 15, wherein
the adhesive layer has a volume resistivity of less than or equal to 10⁴ Qcm, and
the protective layer has a volume resistivity of greater than or equal to 10⁷ Ω·cm.

17. The electrode for a secondary battery according to any one of claims 1 to 16, wherein
the adhesive layer has a thickness of greater than or equal to 0.1 µm and less than or equal to 10 µm, and
the mixture layer has a thickness of greater than or equal to 30 µm and less than or equal to 300 µm .

18. A secondary battery comprising a wound electrode assembly in which a positive electrode and a negative electrode are wound with a separator interposed between the positive electrode and the negative electrode, wherein
at least one of the positive electrode or the negative electrode is the electrode for a secondary battery according to any one of claims 1 to 17.

19. A method for manufacturing an electrode for a secondary battery, the method comprising,
in manufacture of the electrode for a secondary battery according to any one of claims 1 to 17,
an adhesive layer forming step of forming the adhesive layer by a wet process on the core member excluding the exposed part;
a protective layer forming step of forming the protective layer by a wet process on the exposed part; and
a mixture layer forming step of producing a mixture sheet by a dry process, and attaching the mixture sheet produced to the adhesive layer to form the mixture layer.

20. The method for manufacturing an electrode for a secondary battery according to claim 19, wherein the protective layer forming step is performed after the adhesive layer forming step and before the mixture layer forming step, or performed simultaneously with the adhesive layer forming step.

21. The method for manufacturing an electrode for a secondary battery according to claim 19, wherein the protective layer forming step is performed after the mixture layer forming step.
